# EUROPEAN PATENT SPECIFICATION

(11) **EP 1 209 064 B1**
(45) Date of publication and mention of the grant of the patent: **18.10.2006**
(21) Application number: 01127188.9
(22) Date of filing: 16.11.2001
(51) Int. Cl.: B62D 25/06

(54) **Roof panel for motor vehicles and process to fix it**
Dachaufbau eines Kraftfahrzeuges und Verfahren zur Befestigung
Panneau de toit pour véhicule et méthode de fixation

(30) Priority: 22.11.2000 IT TO001093
(43) Date of publication of application: 29.05.2002
(73) Proprietor: FIAT AUTO S.p.A., 10135 Torino (IT)
(72) Inventor: Castello, Carlo, 10135 Torino (IT)
(74) Representative: Di Francesco, Gianni

(56) References cited:
- EP-A- 1 108 640
- DE-A- 19 939 978
- DE-C- 19 632 054
- FR-A- 2 632 923
- US-A- 6 027 160
- PATENT ABSTRACTS OF JAPAN vol. 1996, no. 02, 29 February 1996 (1996-02-29) & JP 07 251757 A (HONDA MOTOR CO LTD), 3 October 1995 (1995-10-03)

## Description

The present invention refers to a roof panel for a motor vehicle and to the process to fix it to the bodywork by means of bonding agents.

Roof panels are generally welded along their perimeter to the bodywork by means of a spot welder. Afterwards the channel that has remained uncovered in order to allow the passage of the electrode of the welder is covered, along the longitudinal edges of the roof panel, by a moulding which is fixed in it by means of bonding edges or pressure.

This fixing method forces the manufacturer to use the aforementioned moulding since it is not possible to automatically weld the roof panel without counting on the space necessary to let the electrode pass.

During the assembly phase a series of operations is therefore necessary to assemble the moulding and the production costs are consequently increased.

A roof panel for the bodywork of a motor vehicle according the preamble of claim 1 is known from JP-A-07251757.

It is an object of the present invention to provide a roof panel for the bodywork of a motor vehicle that allows to overcome said inconveniences and to avoid the need to mount the side mould.

It is a further object of the present invention to provide a process to mount the roof panel according to the invention.

Said object is achieved by means of a roof panel for the bodywork of a motor vehicle presenting the characteristics set forth in claim 1.

Said additional object is achieved by means of the roof panel being mounted following the process as claimed in claim 2.

Additional characteristics and advantages will become more clear from the following description which refers to the appended drawings provided as non restrictive example and in which:

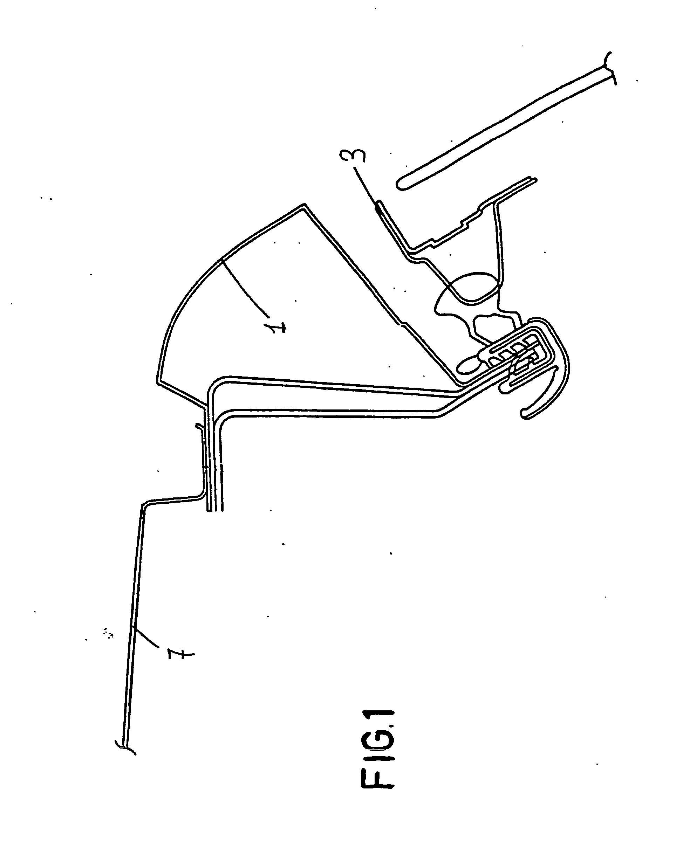

figure 1 is a section view of the upper side part of the bodywork 1 at the area of the car doors 3, as well as of the roof panel 7 connected to it by means of the process of the known art, and
figure 2 is a section view of the upper side part of the bodywork 1 at the area of the car doors, and of the roof panel connected to it by means of the process according to the present invention.

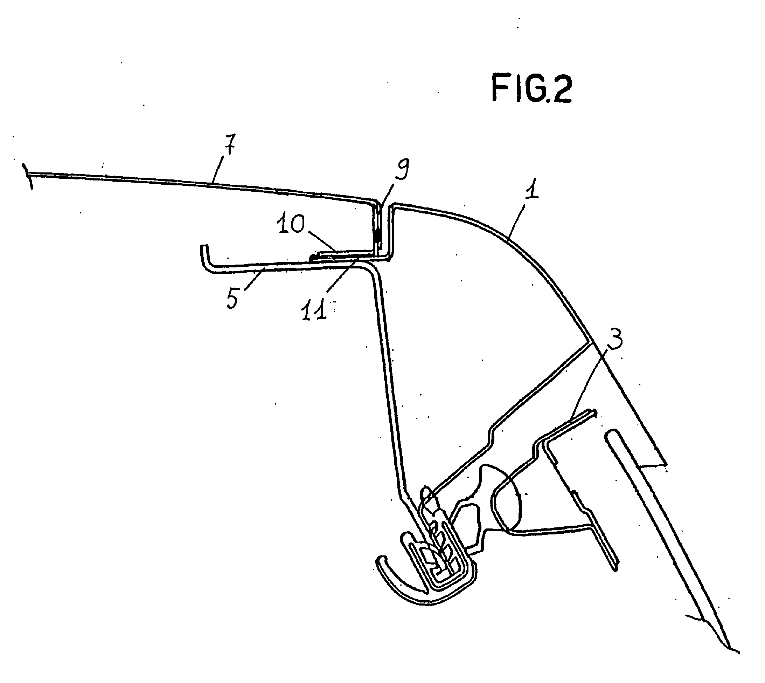

With reference to figure 2, reference number 1 indicates the upper side part of the bodywork of a motor vehicle, at the point over one of the car doors 3.

At the point where it is connected to the roof panel the bodywork forms a seat 5 which is basically L-shaped, being the L flattened. Inside said seat there is the external side profile of the roof panel 7 which, according to the invention, presents a small edge 9, bent in the direction of the seat 5, the length of which is such that it becomes possible to weld on it a tab 10 presenting an L-shaped transversal section thus forming a U-shaped side edge of the roof panel, the U of the edge being flattened. As it can be easily understood, it is not possible to achieve this edge by means of the mere forming which is generally used to form the roof panel.

The size of the roof panel according to the invention will be such that it can be housed inside the seat 5 made on the bodywork, with the minimum clearance necessary to the mounting. The roof panel is positioned in order to have one of the walls of the tab 10 resting on the seat 5 so that it can be bond to it by means of a common bonding agent 11 which polymerises when heated.

The process to mount the roof panel on the bodywork of a motor vehicle according to the present invention implies the following steps:
a) shearing and moulding the roof panel 7 the size of which is basically equal to the size of the seat on the bodywork that will house it.
b) welding to the small axial edge of a tab 10 of L-shaped transversal section, in order to form a U-shaped transversal edge, the U being flattened.
c) distribution of a film of an oven-polymerising bonding agent 11 on the edge of the seat on the bodywork of the motor vehicle.
d) positioning of the roof panel on the edge of the bodywork with subsequent compression of the film of bonding agent.
e) stay of the bodywork in a place with high temperature for the time necessary to make the bonding agent polymerise.

As stated before, the invention allows to avoid the mould so that the production costs are lower and the product is better from the esthetical point of view. It is obvious that the connection of the roof panel to the front and rear part of the bodywork (windscreen space and rear channel) is achieved by means of the processs usually adopted, with no changes in the methods and operations already in use.

## Claims

1. A roof panel for the bodywork (1) of a motor vehicle with a size basically equal to the size of the seat (5) adapted to house it on the bodywork (1) and presenting a side edge provided with a small edge (9) bent in the direction of the seat (5), **characterised in that** a tab (10), with a basically L-shaped section, is welded to the small edge (9) so that a U-shaped section is formed, the U being flattened.

2. Mounting process for the roof panel (7) as claimed in claim 1, **characterised in that** it consists of the following phases:
a) shearing and moulding of the roof panel (7) the size of which is basically equal to the size of the seat (5) adapted to house it on the bodywork (1). The roof panel (7) will be provided at its side with a small edge bent in direction of the seat (5) of the roof panel (7) on the bodywork (1).
b) welding to the small axial edge of a tab (10) ofL-shaped transversal section, in order to form a U-shaped transversal edge, the U being flattened.
c) distribution of a film of an oven-polymerising bonding agent (11) on the edge of the seat (5) on the bodywork (1) of the motor vehicle.
d) positioning of the roof panel (7) on the edge of the bodywork with subsequent compression of the film of bonding agent (11).
e) stay of the bodywork (1) in a place with high temperature for the time necessary to make the bonding agent (11) polymerise.

## Patentansprüche

1. Dachblende für die Karosserie (1) eines Kraftfahrzeuges mit einer Größe, die im Grunde genommen der Größe des Sitzes (5) entspricht, dafür geeignet, diese auf der Karosserie (1) aufzunehmen, und welche eine Seitenkante aufweist, die mit einer kleinen Kante (9) versehen ist, die in Richtung des Sitzes (5) gebogen ist, **dadurch gekennzeichnet, dass** eine Nase (10) mit einem im Grunde genommen L-förmigen Abschnitt so an die kleine Kante (9) angeschweißt ist, dass ein U-förmiger Abschnitt gebildet wird, wobei das U abgeplattet ist.

2. Montageverfahren für die Dachblende (7), wie in den vorangehenden Ansprüchen beansprucht, **dadurch gekennzeichnet, dass** dieses Verfahren die folgenden Phasen umfasst:
a) Scherschneiden und Formen der Dachblende (7), deren Größe im Grunde genommen der Größe des Sitzes (5) entspricht, dafür geeignet, diese auf der Karosserie (1) aufzunehmen. Die Dachblende (7) ist auf ihrer Seite mit einer kleinen Kante versehen, die in Richtung des Sitzes (5) der Dachblende (7) auf der Karosserie (1) gebogen ist;
b) Schweißen einer Nase (10) des L-förmigen schräg verlaufenden Abschnitts an die kleine axiale Kante, um eine U-förmige schräg verlaufende Kante auszubilden, wobei das U abgeplattet ist;
c) Verteilen einer dünnen Schicht eines ofen-polymerisierenden Bindemittels (11) auf die Kante des Sitzes (5) auf der Karosserie (1) des Kraftfahrzeuges;
d) Positionieren der Dachblende (7) auf der Kante der Karosserie mit nachfolgender Kompression der dünnen Schicht des Bindemittels (11);
e) Verweilen der Karosserie (1) an einem Ort mit hoher Temperatur über den Zeitraum hinweg, der erforderlich ist, damit das Bindemittel (11) polymerisiert.

## Revendications

1. Panneau de toit pour la caisse (1) d'un véhicule motorisé avec une taille fondamentalement égale à la taille du siège (5) adapté pour le loger sur la caisse (1) et présentant un bord latéral pourvu d'un petit bord (9) cintré dans la direction du siège (5), **caractérisé en ce qu'**une patte (10), avec une section fondamentalement en forme de L, est soudée au petit bord (9) de sorte qu'une section en forme de U soit formée, le U étant aplati.

2. Processus de montage pour le panneau de toit (7) selon la revendication précédente, **caractérisé en ce qu'**il est constitué des phases suivantes :
a) cisaillement et moulage du panneau de toit (7) dont la taille est fondamentalement égale à la taille du siège (5) adapté pour le loger sur la caisse (1), le panneau de toit (7) sera pourvu au niveau de son côté d'un petit bord cintré dans la direction du siège (5) du panneau de toit (7) de la caisse (1) ;
b) soudage sur le petit bord axial d'une patte (10) de section transversale en forme de L, afin de former un bord transversal en forme de U, le U étant aplati ;
c) distribution d'un film de liant (11) à polymérisation au four sur le bord du siège (5) sur la caisse (1) du véhicule motorisé ;
d) positionnement du panneau de toit (7) sur le bord de la caisse avec une compression subséquente du film de liant (11) ;
e) immobilisation de la caisse (1) dans un emplacement à haute température pendant le temps nécessaire pour que le liant (11) se polymérise.
